# EUROPÄISCHE PATENTSCHRIFT

(11) **EP 1 343 792 B1**
(45) Veröffentlichungstag und Bekanntmachung des Hinweises auf die Patenterteilung: **02.02.2005**
(21) Anmeldenummer: 01985346.4
(22) Anmeldetag: 30.11.2001
(51) Int. Cl.: C07F 5/02

(54) **VERFAHREN ZUR HERSTELLUNG VON FORMYLPHENYLBORONSÄUREN**
METHOD FOR PRODUCING FORMYLPHENYLBORONIC ACIDS
PROCEDE DE FABRICATION D'ACIDES FORMYLPHENYLBORIQUES

(30) Priorität: 14.12.2000 DE 10062305; 21.12.2000 DE 10063738
(43) Veröffentlichungstag der Anmeldung: 17.09.2003
(73) Patentinhaber: Clariant GmbH, 65929 Frankfurt am Main (DE)
(72) Erfinder: MEUDT, Andreas, 65439 Flörsheim-Weilbach (DE); SCHERER, Stefan, 64572 Büttelborn (DE); VOLLMÜLLER, Frank, 60323 Frankfurt am Main (DE); ERBES, Michael, 65931 Frankfurt am Main (DE)
(74) Vertreter: Hütter, Klaus, Dr.
(86) Internationale Anmeldenummer: PCT/EP2001/014014
(87) Internationale Veröffentlichungsnummer: WO 2002/048155

(56) Entgegenhaltungen:
- EP-A- 1 070 718
- WO-A-93/23391
- DE-A- 19 917 979
- US-A- 5 157 149

## Beschreibung

Die Erfindung betrifft ein Verfahren zur Herstellung von Formylphenylboronsäuren der Formel (I).

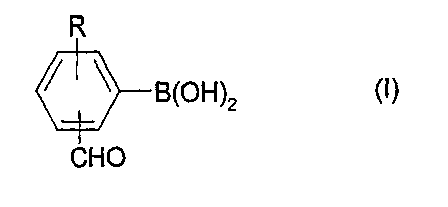

Ortho-, meta- und para-Formylphenylboronsäuren sind vielseitige Bausteine in der organischen Synthese und wichtige Zwischenprodukte in der Synthese von Wirkstoffen der agrochemischen und pharmazeutischen Industrie, vor allem aber sind die Verbindungen als Enzymstabilisatoren, -inhibitoren und Bakterizide von hoher Effizienz und Bedeutung.

Trotz des durch die genannten Anwendungen bestehenden hohen wirtschaftlichen Interesses an diesen Verbindungen sind nur wenige und zudem teure Herstellwege in der Literatur beschrieben.

Boronsäuren werden ganz allgemein durch Umsetzung von metallorganischen Verbindungen (z.B. Grignard-Verbindungen oder Lithiumorganylen) mit Bortrihalogeniden oder Borsäuretrialkylestern hergestellt. Aufgrund der Reaktivität der Formylgruppe gegenüber Organometallverbindungen ist diese Vorgehensweise bei der Herstellung von Formylphenylboronsäuren nur dann möglich, wenn die Formylgruppe vorher entsprechend geschützt wird. Als Rohstoffe sind daher p-Halogenbenzaldehyde einzusetzen, die beispielsweise acetalisiert und anschließend zum metallorganischen Reagenz umgesetzt werden.

Nöth et al. (Chem. Ber. 1990, 1841-1843) setzen p-Brombenzaldehyd zum Diethylacetal um, grignardisieren mit Magnesium-Spänen in Tetrahydrofuran (THF) und erhalten nach Umsetzung mit Tri-n-butylborat Formylphenylboronsäure in einer Ausbeute von 70 %. Nachteilig an dieser Synthese ist der hohe Preis von Brombenzaldehyd verglichen mit Chlorbenzaldehyd, die Notwendigkeit einer Ultraschallaktivierung bei der Grignard-Herstellung und der Einsatz des teuren Tributylborats; außerdem sind aufwendige Reinigungsprozeduren zu durchlaufen (u.a. durch das Hydrolyseprodukt 1-Butanol).

Jendralla et al. (Liebigs Ann. 1995, 1253-1257) erreichen durch Verfahrensverbesserungen bei der gleichen Synthesesequenz immerhin eine Verbesserung auf 78 %, auch hier bleiben allerdings vorstehend genannte Nachteile unverändert bestehen.

Deutlich bessere Ausbeuten (bis zu 99 %) erreichen Kobayashi et al. durch Umsetzung des Brombenzaldehyd-Diethylacetals mit n-Butyllithium und Reaktion mit Triisopropylborat, gegen ein wirtschaftlich interessantes Verfahren sprechen hier allerdings die hohen Preise von Brombenzaldehyd, Triisopropylborat und Butyllithium.

Es bestand daher das Bedürfnis ein Verfahren zur Herstellung von Formylphenylboronsäuren zu entwickeln, das von kommerziell leicht erhältlichen und günstigen Ausgangsverbindungen ausgeht und die Zielprodukte durch Umsetzung mit billigen Borverbindungen in guten Ausbeuten und hohen Reinheiten zugänglich macht.

Es wurde zunächst festgestellt, dass die benötigten Grignard-Verbindungen aus verschiedenen Chlorbenzaldehyd-Acetalen durch Umsetzung mit Magnesium in verschiedenen Ethern nach Methoden des Standes der Technik nicht zugänglich sind.
In der nicht vorveröffentlichten deutschen Anmeldung DE-A- 199 60 866 wurde gefunden, dass durch Zusatz von Übergangsmetall-Katalysatoren und gleichzeitige mechanische Aktivierung des Magnesiums die Grignard-Verbindungen in guten Ausbeuten erhalten werden können. Nach Umsetzung mit Trimethylborat resultieren die korrespondierenden Formylphenylboronsäuren in guten Ausbeuten. Hierbei handelt es sich um eine wirtschaftlich sehr interessante Herstellungsmethode, die allerdings bedingt durch die erforderliche mechanische Aktivierung des Magnesiums hohe Investitionen erfordert und hohe Anforderungen an den Anlagenbau stellt. Gleichzeitig enthalten die Produkte Spuren der verwendeten Übergangsmetalle im ppm-Bereich, die je nach Anwendung (Pharma, Enzyminhibitoren) nach aufwendigen Methoden quantitativ entfernt werden müssen.

Die Aufgabe der vorliegenden Erfindung war es somit, ein einfaches und wirtschaftliches Verfahren zur Herstellung von Formylphenylboronsäuren ausgehend von kommerziell leicht erhältlichen und günstigen Ausgangsverbindungen zur Verfügung zu stellen, das ohne die Verwendung von Übergangsmetallkatalysatoren und ohne hohe Investitionen in den Anlagenbau auskommt. Gleichzeitig soll das Verfahren die Produkte in möglichst hohen Ausbeuten und Reinheiten liefern.

Das erfindungsgemäße Verfahren löst diese Aufgabe und betrifft ein Verfahren zur Herstellung von Formylphenylboronsäuren der allgemeinen Formel (I) durch Umsetzung von geschützten Chlorbenzaldehyden der allgemeinen Formel (II) mit Lithiummetall in einem inerten Lösungsmittel zu Verbindungen der Formel (III) und anschließender Umsetzung mit einer Borverbindung der Formel BY₃ zu Verbindungen der Formel (I) 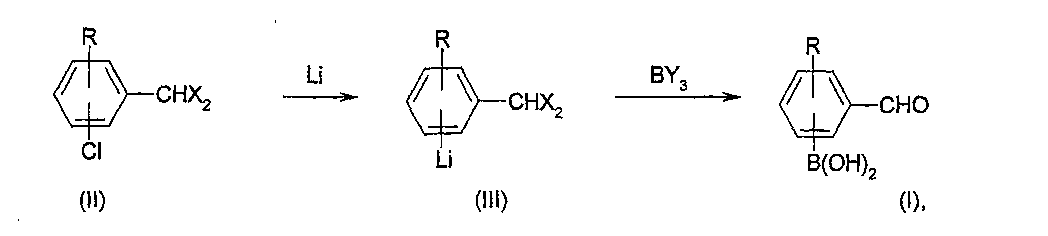 worin Y für eine geradkettige oder verzweigte C₁-C₆-Alkoxy- oder C₁-C₅-Dialkylaminogruppe, Halogen oder eine C₁-C₆-Alkylthiogruppe steht,
R steht für H, oder einen C₁-C₅-Alkyl- oder C₁-C₅-Alkoxyrest. Der Rest CHX₂ ist vorzugsweise ein Acetal der Formel (IV) oder (V) 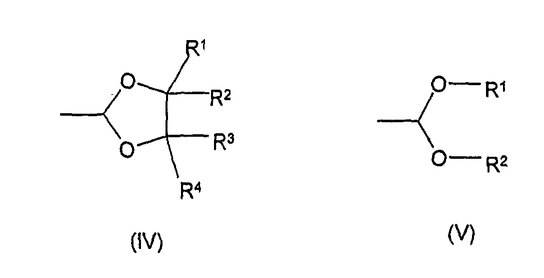 worin R¹ bis R⁴ gleich oder verschieden sind und die Bedeutung Wasserstoff, C₁-C₁₂-Alkyl oder Phenyl haben, oder R¹ und R² zusammen oder R¹ und R³ zusammen einen 5- oder 6-gliedrigen aliphatischen oder aromatischen Ring bilden; oder ein Oxazolidin der Formel (VI) 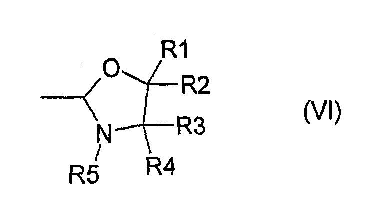 oder ein Aminal der Formel (VII) 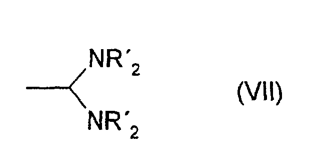 worin R¹ bis R⁴ wie vorstehend definiert ist und R⁵ und R' die Bedeutung C₁-C₆-Alkyl oder Aryl haben.

Als Ausgangsverbindungen der Formel (II) können geschützte ortho-, meta- oder para-Chlorbenzaldehyde eingesetzt werden.

Obwohl das erfindungsgemäß verwendete Lithiummetall bezogen auf seine Masse ein teurer Rohstoff ist, so ist der Preisunterschied zu Magnesium, bezieht man sich auf die eingesetzten Stoffmengen, vernachlässigbar gering. Das Metall wird im vorliegenden Verfahren als Dispersion, Pulver, Späne, Sand, Granalien, Stücke, Barren oder in anderer Form in einem geeigneten Lösungsmittel vorgelegt und mit dem geschützten Chlorbenzaldehyd zur Reaktion gebracht.
Geeignete inerte Lösungsmittel sind alle solche, die unter den erfindungsgemäßen Bedingungen weder mit Lithiummetall noch mit dem entstehenden lithiierten Aromaten reagieren, besonders aliphatische oder aromatische Ether, tertiäre Amine oder Kohlenwasserstoffe, wie z.B. THF, Diethylether, Diisopropylether, Di-n-butylether, Toluol, Cyclohexan oder Dioxan oder Gemische der in Frage kommenden inerten Lösungsmittel.

Die Umsetzung von Lithiummetall mit geschützten Chlorbenzaldehyden wird bei Temperaturen zwischen -100°C und +35°C durchgeführt, da bei niedrigeren Temperaturen die Reaktion zu langsam verläuft, bei höheren Temperaturen aber die entstehenden Lithiumaryle, beispielsweise die Acetal-, Aminal- oder Oxazolidin-Funktionalität angreifen und spalten. Bevorzugte Reaktionstemperaturen liegen daher im Bereich von -70 bis +10°C, besonders bevorzugt -55 bis +5°C.

Die Umsetzung von Lithium mit Verbindungen der Formel (II) ist im allgemeinen nach 3 bis 18 Stunden, insbesondere in 4 bis 10 Stunden, vollständig abgelaufen, in einigen Fällen kann - je nach Natur des eingesetzten geschützten Chlorbenzaldehyds und des verwendeten Lösungsmittels - die Reaktion deutlich langsamer verlaufen, wodurch schlechte Zeitausbeuten resultieren. Die Geschwindigkeit des Ablaufs dieser Reaktion kann durch die Gegenwart von organischen Redoxkatalysatoren wie Biphenyl, Naphthalin oder anderen organischen Verbindungen erheblich gesteigert werden, die vom Li-Metall rasch Elektronen aufnehmen und diese schnell und effizient auf die C,Cl-Bindung des geschützten Chlorbenzaldehyds übertragen. Die Redoxkatalysatoren werden in Mengen zwischen 0 und 5 mol-% zugesetzt.

Das molare Verhältnis von Lithium zur Verbindung der Formel (II) liegt üblicherweise im Bereich von 1,9:1 bis 8:1, es können allerdings auch größere Überschüsse eingesetzt werden, wenn dies z. B. aus apparativen Gründen vorteilhaft ist, z. B. in Umpumpapparaturen.

Die Konzentration der Lithiumverbindung im Lösungsmittel kann zwischen 0,5 und 50 Gew.-% betragen, bevorzugt sind 5 bis 35 Gew.-%, besonders bevorzugt 15 bis 30 Gew.-%. Der geschützte Chlorbenzaldehyd kann entweder dosiert werden oder (vor allem bei größeren Li-Stücken) vollständig vorgelegt werden.

Die Umsetzung der resultierenden Lithiumorganyle der Formel (III) mit den Borverbindungen wird zur Erzielung hoher Selektivitäten bei niedrigen Temperaturen zwischen +20 und -110°C durchgeführt, bevorzugt zwischen 0 und -80°C durchgeführt. Dabei kann entweder so verfahren werden, dass die Borverbindungen als Flüssigkeiten oder Lösungen zu der Lösung des Lithiumorganyls dosiert werden oder indem die Lösung des Lithiumorganyls zu der (gegebenenfalls als Lösung in Kohlenwasserstoffen oder Ethern vorgelegten) vorgelegten Borverbindung dosiert wird. Zweckmäßigerweise wird ein geringer Überschuss, insbesondere ein Überschuss im Bereich von 5 bis 50 %, an Borverbindung eingesetzt.

Als geeignete Borverbindungen können beispielsweise Borhalogenide, wie BBr₃, BF₃, BCl₃ oder Borsäureester, wie z.B. Trimethylborat, Triisopropylborat oder Tributylborat eingesetzt werden, ebenso können gemischte Halogenborsäureester verwendet werden. Ebenso können Amine oder Thioverbindungen des Bors eingesetzt werden, beispielsweise Tris(diethylamino)boran oder Tris(nbutylthio)boran.

Nach dem Auftauen der Reaktionsmischungen auf Raumtemperatur sind verschiedene Aufarbeitungsmethoden geeignet, beispielsweise Hydrolyse durch Zugabe von Wasser, Einstellen des pH-Wertes in einen leicht sauren Bereich (2,5 - 6,5), Abdestillieren der Lösungsmittel, Filtration und Trocknung des Produkts. Ist es aus wirtschaftlichen Gründen von Interesse, das bei der Lithiierung eingesetzte Lösungsmittel in wasserfreier Form zu erhalten und dieses so direkt wieder in der Lithiierung einzusetzen, so kann dieses auch aus der Reaktionsmischung unter gleichzeitigem Zusatz eines höhersiedenden Lösungsmittels destillativ gewonnen werden, beispielsweise kann Diethylether durch Cyclohexan oder THF durch Toluol ersetzt werden.

Vor der Abtrennung der Formylphenylboronsäuren vom Reaktionsgemisch, beispielsweise durch Filtration oder Zentrifugation, sollten wasserlösliche Lösungsmittel wie THF zweckmäßigerweise z. B. durch Destillation abgetrennt werden, da ansonsten die Löslichkeit der Produkte in Wasser erhöht und die Ausbeuten entsprechend erniedrigt werden. Der pH der Hydrolysemischung ist zunächst im alkalischen Bereich und wird vor der Gewinnung des Produkts bzw. vor dem Abdestillieren wasserlöslicher Lösungsmittel auf einen Wert im Bereich von 7,5 bis 1,0 gestellt, um Nebenreaktionen wie z.B. Cannizzaro-Reaktionen zu verhindern, bevorzugt sind dabei pH-Bereiche zwischen 6,0 und 3,0, besonders bevorzugt der jeweilige pH der freien Boronsäure.
Die Filtration oder Zentrifugation der Produkte wird zweckmäßigerweise bei Temperaturen im Bereich von -10 bis + 75°C durchgeführt.
Die Trocknung der anfallenden Formylphenylboronsäuren muss aufgrund deren Oxidationsempfindlichkeit unter Schutzgas und im Vakuum und bei milden Temperaturen, vorzugsweise im Bereich von 20 bis 80°C, durchgeführt werden.

Das Produkt fällt bei stetem Arbeiten unter Schutzgas in sehr reiner Form an (> 99 %, HPLC a/a) und kann in den meisten Fällen ohne weitere Reinigung weiterverwendet werden.

Für spezielle Anwendungen sind Aufreinigungen erforderlich, die z.B. durch Auflösen in Natronlauge bei 0-30°C, Extraktion mit Toluol oder einem anderen Kohlenwasserstoff oder Ether und nachfolgendes Ausfällen durch Ansäuern vorgenommen werden können. Derartige geeignete Aufreinigungsmethoden sind beispielsweise in der deutschen nicht vorveröffentlichten Anmeldung DE-A-10 032 017.1 beschrieben.

Das erfindungsgemäße Verfahren soll durch die nachfolgenden Beispiele erläutert werden, ohne die Erfindung darauf zu beschränken:

### Beispiel 1

Vorgelegt werden 3,52 g Lithiumspäne und 180 g THF bei -50°C. 53,6 g 4-Chlorbenzaldehyd-Diethylacetal werden in 90 min zugetropft. Nach weiteren 2 Stunden Nachrühren wird auf -70°C abgekühlt und bei dieser Temperatur 31,2 g Trimethylborat gelöst in 60 ml THF in 15 min zugetropft. Über Nacht lässt man den Ansatz auftauen. Bei 0°C werden 250 g Wasser zugegeben und der pH mit 26,5 g HCl 36 % auf 4,5 eingestellt. Das wasserfeuchte THF wird im leichten Vakuum möglichst vollständig abdestilliert. Die resultierende Suspension wird auf 10°C abgekühlt und bei 10°C abgesaugt. Das Produkt wird mit wenig Eiswasser gewaschen und bei 40°C im leichten Stickstoffstrom getrocknet. Die Ausbeute an reiner 4-Formylphenylboronsäure beträgt 35,8 g (95,6 %).

### Beispiel 2

Vorgelegt werden 4,3 g Lithiumspäne, 0,03g Biphenyl und 450 g THF bei -50°C. 53,6 g 4-Chlorbenzaldehyd-Ethylenglykolacetal werden in 90 min zugetropft. Nach weiteren 7 h Nachrühren wird auf -60°C abgekühlt und bei dieser Temperatur 32,2 g Trimethylborat gelöst in 30 ml THF in 30 min zugetropft. Über Nacht lässt man den Ansatz auftauen. Bei 0°C werden 250 g Wasser zugegeben und der pH mit 26,5 g HCl 36 % auf 4,5 eingestellt. Das wasserfeuchte THF wird im leichten Vakuum möglichst vollständig abdestilliert. Die resultierende Suspension wird auf 10°C abgekühlt und bei 10°C abgesaugt. Das Produkt wird mit wenig Eiswasser gewaschen und bei 40°C im leichten Stickstoffstrom getrocknet. Die Ausbeute an reiner 4-Formylphenylboronsäure beträgt 33,8 g (90,1 %), die etwas geringere Ausbeute als im ersten Experiment erklärt sich durch das Spaltprodukt Glykol, das die Löslichkeit des Produkts in der wässrigen Phase erhöht.

### Beispiel 3

Die Herstellung der Lithiumverbindung wurde analog zu Beispiel 1 durchgeführt, allerdings wurde in diesem Fall eine 1:1-Mischung aus THF und Toluol als Lösungsmittel verwendet. Die resultierende Li-Verbindung wurde mit 1,2 Äquivalenten einer käuflichen Lösung von BCl₃ in Toluol bei -70°C umgesetzt. Die Ausbeute an 4-Formylphenylboronsäure betrug hier 79 %.

### Beispiel 4

Beispiel 2 wurde unter Zusatz von 0,2 mol-% Biphenyl wiederholt, wodurch die Nachrührzeit auf 2 Stunden halbiert werden konnte. Die Ausbeute betrug hier 89 %.

### Beispiel 5

Die Herstellung der Li-Verbindung wurde analog zu Beispiel 2 wurde im Lösungsmittel Toluol unter Zusatz von 0,25 % Biphenyl durchgeführt, die Nachrührzeit musste auf 14 Stunden erhöht werden. Ausbeute 83 %.

### Beispiel 6

Ausgehend von 3-Chlorbenzaldehyd-Diethylacetal wurde analog zu Beispiel 1 in einer Ausbeute von 91,5 % 3-Formylphenylboronsäure erhalten.

### Beispiel 7

Ausgehend von 2-Chlorbenzaldehyd-Diethylacetal wurde analog zu Beispiel 1 in einer Ausbeute von 83 % 2-Formylphenylboronsäure erhalten.

### Beispiel 8

Vorgelegt werden 3,52 g Lithiumspäne und 180 g THF bei -50°C. 53,7 g 3-Chlorbenzaldehyd-N,N'-dimethylethylendiaminal (255 mmol) werden in 90 min zugetropft. Nach weiteren 2 Stunden Nachrühren wird auf -50°C abgekühlt und bei dieser Temperatur 31,2 g Trimethylborat gelöst in 60 ml THF in 15 min zugetropft. Über Nacht lässt man den Ansatz auftauen. Bei 0°C werden 290 g Wasser zugegeben und der pH mit 36,9 g HCl 37 % auf 3,9 eingestellt. Das wasserfeuchte THF wird im leichten Vakuum möglichst vollständig abdestilliert (bei Normaldruck, um vollständige Spaltung des Aminals zu gewährleisten). Die resultierende Suspension wird auf 10°C abgekühlt und bei 10°C abgesaugt. Das Produkt wird mit Eiswasser sorgfältig gewaschen und bei 40°C im leichten Stickstoffstrom getrocknet. Die Ausbeute an reiner 3-Formylphenylboronsäure beträgt 34,5 g (92,1 %).

## Patentansprüche

1. Verfahren zur Herstellung von Formylphenylboronsäuren der allgemeinen Formel (I) durch Umsetzung von geschützten Chlorbenzaldehyden der allgemeinen Formel (II) mit Lithium in einem inerten Lösungsmittel zu Verbindungen der Formel (III) und anschließender Umsetzung mit einer , Borverbindung der Formel BY₃ zu Verbindungen der Formel (I) 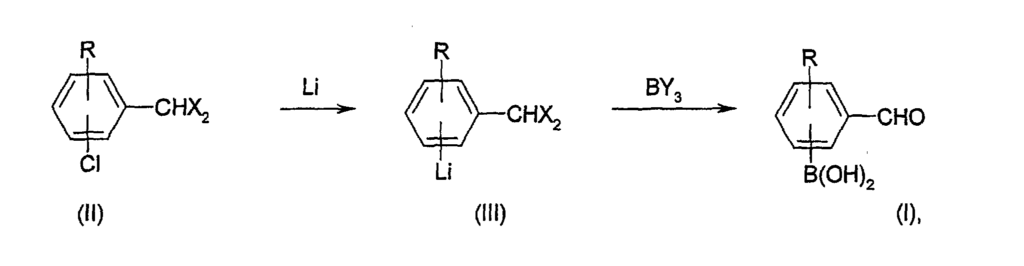 worin Y für eine geradkettige oder verzweigte C₁-C₆-Alkoxygruppe, C₁-C₅-Dialkylaminogruppe, Halogen oder eine C₁-C₆-Alkylthiogruppe steht,
R steht für H, einen C₁-C₅-Alkyl- oder einen C₁-C₅-Alkoxyrest,
Der Rest CHX₂ ist vorzugsweise ein Acetal der Formel (IV) oder (V) 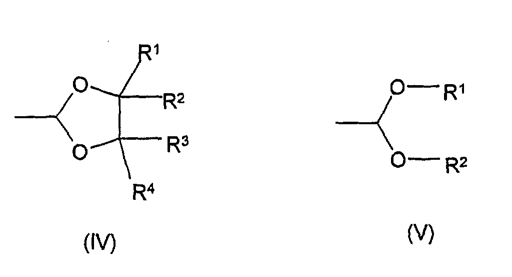 worin R¹ bis R⁴ gleich oder verschieden sind und die Bedeutung Wasserstoff, C₁-C₁₂-Alkyl oder Phenyl haben, oder R¹ und R² zusammen oder R¹ und R³ zusammen einen 5- oder 6-gliedrigen aliphatischen oder aromatischen Ring bilden; oder ein Oxazolidin der Formel (VI) 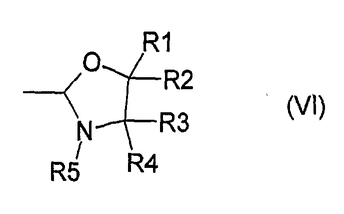 oder ein Aminal der Formel VII 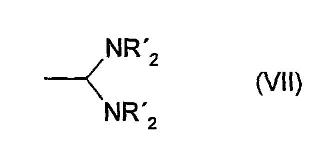 worin R¹ bis R⁴ wie vorstehend definiert ist und R⁵ und R' die Bedeutung C₁-C₆-Alkyl oder Aryl haben.

2. Verfahren nach Anspruch 1, wobei das Verhältnis von Lithium: Verbindung der Formel (II) im Bereich von 1,9:1 bis 8:1 liegt.

3. Verfahren nach mindestens einem der vorhergehenden Ansprüche, wobei das Lithium in Form von Dispersionen, Pulver, Sand, Spänen, Stücken oder Granulat vorgelegt und mit dem geschützten Chlorbenzaldehyd der Formel (II) zur Reaktion gebracht wird.

4. Verfahren nach mindestens einem der vorhergehenden Ansprüche, wobei die Umsetzung von Lithium mit dem geschützten Chlorbenzaldehyd bei einer Temperatur im Bereich von -100°C bis +35°C durchgeführt wird.

5. Verfahren nach mindestens einem der vorhergehenden Ansprüche, wobei als inerte Lösungsmittel aliphatische oder aromatische Ether, tertiäre Amine oder Kohlenwasserstoffe verwendet werden.

6. Verfahren nach mindestens einem der vorhergehenden Ansprüche, wobei die Umsetzung von Verbindungen der Formel (II) mit Lithium in Gegenwart von organischen Redoxkatalysatoren durchgeführt wird.

7. Verfahren nach mindestens einem der vorhergehenden Ansprüche, wobei die Umsetzung der Lithiumorganyle der Formel (III) mit den Borverbindungen BY₃ bei Temperaturen im Bereich von +20°C bis -110°C durchgeführt wird.

8. Verfahren nach mindestens einem der vorhergehenden Ansprüche, wobei die Borverbindung in Bezug auf das Lithiumorganyl im Überschuss zugesetzt wird.

9. Verfahren nach mindestens einem der vorhergehenden Ansprüche, wobei vor Abtrennung der Formylphenylboronsäuren der Formel (I) wasserlösliche Lösungsmittel destillativ entfernt werden.

10. Verfahren nach Anspruch 9, wobei vor dem Abdestillieren der Lösungsmittel der pH auf einen Wert im Bereich von 7,5 bis 1,0 eingestellt wird.

11. Verfahren nach Anspruch 9 und/oder 10, wobei die Formylphenylboronsäure der Formel (I) bei Temperaturen im Bereich von -10 bis +75°C durch Filtration oder Zentrifugation vom Reaktionsgemisch abgetrennt wird.

12. Verfahren nach mindestens einem der vorhergehenden Ansprüche, wobei die erhaltenen Formylphenylboronsäuren der Formel (I) unter Schutzgas, gegebenenfalls im Vakuum, getrocknet werden.

## Claims

1. A process for preparing formylphenylboronic acids of the formula (I) by reaction of protected chlorobenzaldehydes of the formula (II) with lithium in an inert solvent to form compounds of the formula (III) and subsequent reaction with a boron compound of the formula BY₃ to give compounds of the formula (I) 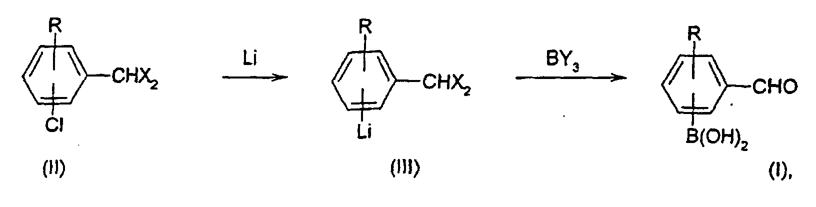 where Y is a straight-chain or branched C₁-C₆-alkoxy or C₁-C₅-dialkylamino group, halogen or a C₁-C₆-alkylthio group, and R is H or a C₁-C₅-alkyl or C₁-C₅-alkoxy radical, and the radical CHX₂ is preferably an acetal of the formula (IV) or (V) 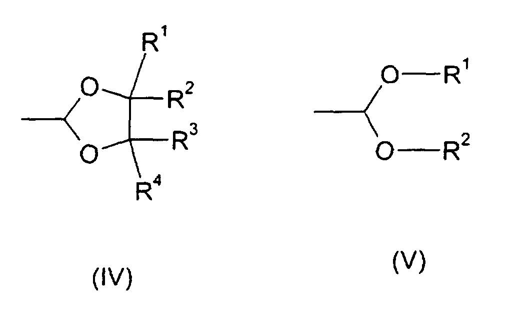 where R¹ to R⁴ are identical or different and are each hydrogen, C₁-C₁₂-alkyl or phenyl, or R¹ and R² together or R¹ and R³ together form a 5- or 6-membered aliphatic or aromatic ring; or an oxazolidine of the formula (VI) 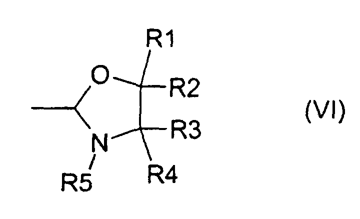 or an aminal of the formula (VII) 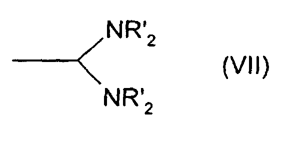 where R¹ to R⁴ are as defined above and R⁵ and R' are each C₁-C₆-alkyl or aryl.

2. The process as claimed in claim 1, wherein the ratio of lithium: compound of the formula (II) is in the range from 1.9:1 to 8:1.

3. The process as claimed in either of the preceding claims, wherein the lithium is initially charged in the form of a dispersion, powder, sand, turnings, pieces or granules and is reacted with the protected chlorobenzaldehyde of the formula (II).

4. The process as claimed in at least one of the preceding claims, wherein the reaction of lithium with the protected chlorobenzaldehyde is carried out at a temperature in the range from -100°C to +35°C.

5. The process as claimed in at least one of the preceding claims, wherein aliphatic or aromatic ethers, tertiary amines or hydrocarbons are used as inert solvents.

6. The process as claimed in at least one of the preceding claims, wherein the reaction of compounds of the formula (II) with lithium is carried out in the presence of organic redox catalysts.

7. The process as claimed in at least one of the preceding claims, wherein the reaction of the organolithium compounds of the formula (III) with the boron compounds BY₃ is carried out at temperatures in the range from +20°C to -110°C.

8. The process as claimed in at least one of the preceding claims, wherein the boron compound is used in an excess relative to the organolithium compound.

9. The process as claimed in at least one of the preceding claims, wherein water-soluble solvents are removed by distillation before the formylphenylboronic acids of the formula (I) are separated off.

10. The process as claimed in claim 9, wherein the pH is adjusted to a value in the range from 7.5 to 1.0 before the solvents are distilled off.

11. The process as claimed in claim 9 and/or 10, wherein the formylphenylboronic acid of the formula (I) is separated off from the reaction mixture by filtration or centrifugation at temperatures in the range from -10 to +75°C.

12. The process as claimed in at least one of the preceding claims, wherein the formylphenylboronic acids of the formula (I) obtained are dried under protective gas, if desired under reduced pressure.

## Revendications

1. Procédé pour la préparation d'acides formylphénylboroniques de formule générale (I) par réaction de chlorobenzaldéhydes protégés de formule générale (II) avec du lithium sous une atmosphère inerte pour obtenir des composés de formule (III)) et ensuite réaction avec un composé de bore de formule BY₃ pour obtenir des composés de formule (I) 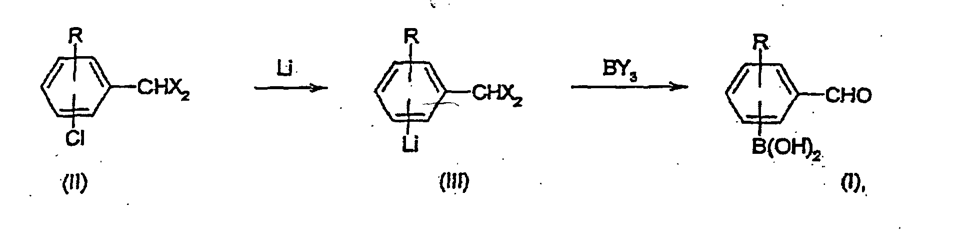 dans lequel Y représente un groupe alcoxy en C₁ à C₆ à chaîne linéaire ou ramifié, un groupe dialkylamino en C₁ à C₅, un halogène ou un groupe alkylthio en C₁ à C₆, R représente H, un groupe alkyle en C₁ à C₅ ou alcoxy en C₁ à C₅, le groupe CHX₂ est de préférence un acétal de formule (IV) ou (V) 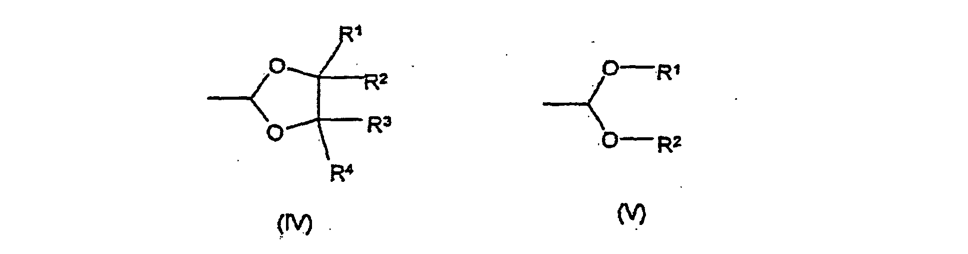 dans laquelle R¹ à R⁴ sont identiques ou différents et représentent un hydrogène, un alkyle en C₁ à C₂ ou phényle, ou R¹ et R² ensemble ou R¹ et R³ ensemble forment un cycle aliphatique ou aromatique à 5 ou 6 chaînons ; ou une oxazolidine de formule (VI) 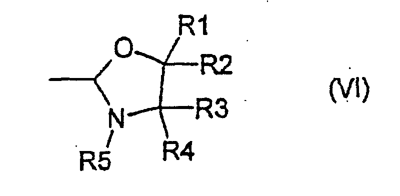 ou un aminal de formule VII 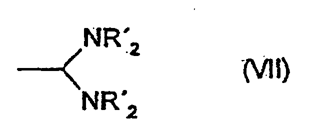 dans laquelle R¹ à R⁴ sont définis comme précédemment et R⁵ et R' ont la signification d'un alkyle en C₁ à C₆ ou aryle.

2. Procédé selon la revendication 1, dans lequel le rapport de lithium:composé de formule (II) se situe dans la gamme de 1,9:1 à 8:1.

3. Procédé selon au moins une des revendications précédentes, dans lequel on apporte le lithium sous forme de dispersions, de poudre, de sable, de copeaux, de morceaux ou de granulés et on les met à réagir avec le chlorobenzaldéhyde protégé de formule (II).

4. Procédé selon au moins une des revendications précédentes, dans lequel on réalise la réaction du lithium avec le chlorobenzaldéhyde protégé à une température dans la gamme de -100 °C à +35 °C.

5. Procédé selon au moins une des revendications précédentes, dans lequel on utilise comme solvants inertes des éthers aliphatiques ou aromatiques, des amines tertiaires ou des hydrocarbures.

6. Procédé selon au moins une des revendications précédentes, dans lequel on réalise la réaction de composés de formule (II) avec du lithium en présence de catalyseurs redox organiques.

7. Procédé selon au moins une des revendications précédentes, dans lequel on réalise la réaction des organolithiums de formule (III) avec des composés du bore BY₃ à des températures dans la gamme de +20 °C à -110 °C.

8. Procédé selon au moins une des revendications précédentes, dans lequel on ajoute le composé du bore en excès par rapport à l'organolithium.

9. Procédé selon au moins une des revendications précédentes, dans lequel on élimine par distillation les solvants hydrosolubles avant séparation des acides formylphénylboroniques de formule (I).

10. Procédé selon la revendication 9, dans lequel on ajuste avant la distillation des solvants le pH à une valeur dans la gamme de 7,5 à 1,0.

11. Procédé selon la revendication 9 et/ou 10, dans lequel on sépare l'acide formylphényl-boronique de formule (I) à des températures dans la gamme de -10 à +75 °C par filtration ou centrifugation du mélange réactionnel.

12. Procédé selon au moins une des revendications précédentes, dans lequel on sèche les acides formylphénylboroniques obtenus de formule (I) sous gaz protecteur, éventuellement sous vide.
